(19) Europäisches Patentamt
European Patent Office
Office européen des brevets

(11) Publication number: **0 138 627**
**A2**

# (12) EUROPEAN PATENT APPLICATION

(21) Application number: **84307196.0**

(22) Date of filing: **18.10.84**

(51) Int. Cl.⁴: **C 01 B 3/04**

(30) Priority: **18.10.83 AU 1905/83**

(43) Date of publication of application: **24.04.85**
**Bulletin 85/17**

(84) Designated Contracting States: **BE CH DE FR GB IT LI NL**

(71) Applicant: **COMMONWEALTH SCIENTIFIC AND INDUSTRIAL RESEARCH ORGANIZATION, Limestone Avenue, Campbell Australian Capital Territory 2601 (AU)**

(72) Inventor: **Mau, Albert Wai-Hing, 2 Dalkeith Close, Glen Waverley Victoria (AU)**
Inventor: **Sasse, Wolfgang Herman Fritz, 27 Nott Street, East Malvern Victoria (AU)**

(74) Representative: **Lawrence, Peter Robin Broughton et al, GILL JENNINGS & EVERY 53-64 Chancery Lane, London WC2A 1HN (GB)**

(54) **Energy transfer agents.**

(57) A photochemical reaction system which produces hydrogen by reduction of hydronium ions using methylviologen or a related compound as an electron transfer agent and a coloured compound or compounds as sensitizer wherein a water-soluble pyrene derivative is present in amount sufficient to act as an excitation trap to transfer the energy from the sensitizer to the electron transfer agent.

EP 0 138 627 A2

COMMONWEALTH SCIENTIFIC
AND INDUSTRIAL RESEARCH
ORGANIZATION

60/2353/02

# ENERGY TRANSFER AGENTS

This invention relates to energy transfer agents for photochemical reaction systems, especially those used for the solar reduction of water and to processes for the production of hydrogen utilizing such energy transfer agents.

The development of solar energy as a major source of energy requires techniques for the conversion of solar radiation into forms of energy that can be efficiently stored and transported. These two requirements can be met in a single operation by the photochemical conversion of solar radiation into high-grade chemical fuels (A.W.-H Mau and W.H.F. Sasse, Proc. Roy. Aust. Chem. Inst., 1977, 44, 89).

Among the most attractive options for the photochemical conversion and storage of solar energy is the photocleavage of water by visible light (J.R. Bolton, Science, 1978, 202, 705). This problem has attracted much attention and today many photochemical systems are known that produce hydrogen from water. In nearly all these systems hydrogen is formed by the interaction of the radical cation of methylviologen (1,1-dimethyl-4,4'-bipyridinium dication) with hydronium ions ($H_3O^+$) and a platinum catalyst. The methylviologen radical cation is produced from methylviologen dication by donation of an electron from an excited species whose energy of excitation has come from sunlight.

The species which absorbs the solar radiation and becomes excited (the sensitizer) can be any one or more coloured compounds which absorb ultraviolet and visible light to form excited states. The sensitizer must also be stable for long periods under the conditions of use. The

energy of the excited molecule, its lifetime and its redox properties must be such that the electron transfer agent can be reduced so that it in turn can reduce hydronium ions to hydrogen.

One of the best known systems for the photolysis of water employs the tris(2,2'-bipyridine)ruthenium(II) dication ($Ru(bpy)_3^{2+}$) as sensitizer, methylviologen ($mv^{2+}$) as electron transfer agent, ethylenediaminetetraacetic acid (edta) as sacrificial electron donor, and platinum on poly(vinyl alcohol) (Pt/PVA) as electron transfer catalyst; hydrogen is formed according to the reactions (1-6).

$$Ru(bpy)_3^{2+} + h\nu\ (\lambda < 510\ nm) \rightarrow {}^*Ru(bpy)_3^{2+}, \qquad (1)$$

$$^*Ru(bpy)_3^{2+} \rightarrow Ru(bpy)_3^{2+}, \qquad (2)$$

$$^*Ru(bpy)_3^{2+} + mv^{2+} \rightarrow Ru(bpy)_3^{3+} + mv^{+\cdot}, \qquad (3)$$

$$Ru(bpy)_3^{3+} + mv^{+\cdot} \rightarrow Ru(bpy)_3^{2+} + mv^{2+}, \qquad (4)$$

$$Ru(bpy)_3^{3+} + edta \rightarrow Ru(bpy)_3^{2+} + edta^{+\cdot}, \qquad (5)$$

$$2mv^{+\cdot} + 2H^+ \xrightarrow{Pt} 2mv^{2+} + H_2. \qquad (6)$$

The yields of hydrogen vary considerably with experimental conditions and catalyst; nevertheless there is now agreement that the (initial) quantum yield of hydrogen formation, $\phi \frac{1}{2} H_2$, is 10 ± 2%. One factor which contributes to this low level of performance is the relatively low cage escape yield ($\phi_{ce}$) of ≈25% in reaction (3). $\phi_{ce}$ is a measure of the probability of separation of the ions $Ru(bpy)_3^{3+}$ and $mv^{+\cdot}$ per encounter of $^*Ru(bpy)_3^{2+}$ with $mv^{2+}$. The efficiency of this bimolecular encounter ($\phi_q$) varies with the concentration of $mv^{2+}$ but $\phi_{ce}$ is essentially an inherent property of the ion pair and it cannot be markedly altered by changes in the experimental conditions. Hence

substantial improvements in the cage escape yield require the replacement of $Ru(bpy)_3^{2+}$ and/or $mv^{+\cdot}$ by other reagents.

Some time ago we reported the effects of certain structural modifications of $mv^{2+}$ on the efficiency of hydrogen production with $Ru(bpy)_3^{2+}$ as sensitizer. Although improvements in the production of hydrogen were achieved, they were not caused by increases in the cage escape yields of the quenching step.

We have also reported that the anion of 9-anthracenecarboxylic acid ($AA^-$) is much more effective than $Ru(bpy)_3^{2+}$ as sensitizer for the photoreduction of water. Thus hydrogen has been obtained in quantum yields up to 0.93 in accordance with reactions (7)-(11) and (6):

$$AA^- + h\nu\ (\lambda < 392\ nm) \rightarrow {}^{S}AA^-, \quad (7)$$

$$^{S}AA^- \rightarrow {}^{T}AA^-, \quad (8)$$

$$^{T}AA^- + mv^{2+} \rightarrow AA^{\cdot} + mv^{+\cdot}, \quad (9)$$

$$AA^{\cdot} + mv^{+\cdot} \rightarrow AA^- + mv^{2+}, \quad (10)$$

$$AA^{\cdot} + edta \rightarrow AA^- + edta^{+\cdot} \quad (11)$$

$^{S}AA^-$ denotes the singlet ground state of $AA^-$

$^{T}AA^-$ denotes the excited Triplet state of $AA^-$

In the previous report we also referred to differences in the performance of $AA^-$ and $Ru(bpy)_3^{2+}$ as sensitizer for the photoreduction of water. $AA^-$ yields more hydrogen because reaction (9) gives more $mv^{+\cdot}$ than $^*Ru(bpy)_3^{2+}$ in reaction (3). The higher efficiency of reaction (9) is related to the longer lifetime of $^{T}AA^-$ which leads to more efficient bimolecular quenching; moreover, the pair ($AA^{\cdot}$, $mv^{+\cdot}$) undergoes cage

escape with unit efficiency while the corresponding process with the ruthenium complex yields only ≈0.25.

In the context of solar conversion the stability of the sensitizer and its ability to harvest solar radiation are as important as the yields of hydrogen. In the first two areas $Ru(bpy)_3^{2+}$ is superior to $AA^-$. We realized that the two compounds complement each other as sensitizers for the photoreduction of water and that it was therefore of practical value to combine the favourable attributes of each sensitizer within a single system.

The outcome of quenching experiments suggested that it might be possible to combine the high efficiency of $^TAA^-$ in the production of hydrogen with the more favourable light absorption of $Ru(bpy)_3^{2+}$.

Accordingly we examined the production of hydrogen by irradiation of the "enlarged" system $Ru(bpy)_3^{2+}$-$AA^-$-$mv^{2+}$-edta-Pt/PVA under conditions which excluded direct excitation of $AA^-$. The results obtained showed that in the presence of even small amounts of $AA^-$ the hydrogen yield is substantially greater than that obtained by irradiation of the system $Ru(bpy)_3^{2+}$-$mv^{2+}$-edta-Pt/PVA.$\phi$

However despite the increased efficiency of hydrogen formation shown by our experiments, the stability of the anthracene carboxylate anion and other water soluble anthracene derivatives is not sufficient for a long lived practical system for the solar photolysis of water on a commercial scale. The excited molecules undergo a variety of side reactions leading to the loss of the anthracene type energy transfer agent and eventual cessation of hydrogen production. Some of these side reactions are photodecarboxylation from the triplet state, photodimerization from the singlet state, and irreversible oxidation.

In the case of the anthracene carboxylate anion these can destroy up to 1% of the anion per cycle.

A principal object of the present invention is to provide a means for increasing the rate of production of hydrogen and its overall yield in systems of the general type described above. The basis for our present invention resides in our discovery that pyrene derivatives can be used as energy transfer agents in a manner analogous to our previous experiments with anthracene carboxylate but with greatly superior performance and durability.

When water soluble pyrene derivatives, e.g. trimethylammonio pyrene salts, are added to the hydrogen producing system described in Equations (1) to (6), e.g. using tris(2,2'-bipyridine)ruthenium(II) dication as sensitizer, methyl viologen as electron transfer agent, edta as sacrificial electron donor and platinum on PVA as electron transfer catalyst, the increased light utilization efficiency and hydrogen production rate noted with anthracene carboxylate is coupled with a long lifetime for the system components. In particular the lifetime of a system using pyrene derivatives is about 100 times that of an analogous system using anthracene carboxylate.

Suitable pyrene derivatives must have some water solubility, have an appropriate redox potential and a long triplet lifetime. Examples of these are compounds with the groups $-\overset{+}{N}R_3$; $-\overset{+}{N}R_2H$, $-\overset{+}{N}RH_2$, $-\overset{+}{N}H_3$, $-R'\overset{+}{N}H_3$, $-R'SO_3^-$, zwitterions e.g. $-\overset{+}{N}R_2-(CH_2)_3+\ SO_3^-$, $-\overset{+}{N}R_2-(CH)_2)_3-COO^-$, or, $-\overset{+}{N}R_3-X-COO^-$, where R is a $C_1$-$C_6$ alkyl group, R' is a $C_1$-$C_6$ alkylene group attached to the pyrene nucleus, and X is a $C_1$-$C_6$ alkylene group. e.g.

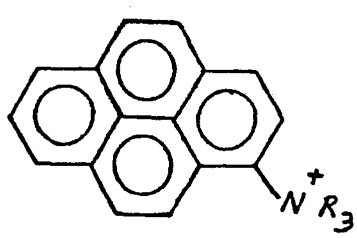

The effect of the energy transfer agents is not restricted to systems using methylviologen per se but is also observable when an energy transfer agent is employed with related electron-transfer agents, such as those disclosed by Johansen et al. in Aust. J. Chem (1981) 34, 981-991 and Launikonis et al. Israel J. Chem, 22 (1982), 158-162. Similarly the effect of the energy transfer agents is not restricted to the use of one sensitizer in isolation (e.g. $Ru(bpy)_3$).

In this way a combination of sensitizers can be used to match the solar spectrum of the sun, the result being a much enhanced rate of hydrogen production. (See example Nos. 2 and 3 below ).

According to one aspect of the present invention, there is provided a photochemical reaction system which produces hydrogen by reduction of hydronium ions using methylviologen or a related compound as an electron transfer agent and a coloured compound or compounds as sensitiser characterised in that a water soluble pyrene derivative is present in amount sufficient to act as an excitation trap to transfer the energy from the sensitizer to the electron transfer agent with high efficiency.

The invention also includes, in another aspect, a process for the production of hydrogen by solar reduction of water, in which hydrogen is produced by the interaction of an electron transfer agent with the hydronium ion and a platinum catalyst, characterised in that the said electron transfer agent is activitated by an energy transfer agent which is a water soluble pyrene derivative and is itself activated by a sensitizer which captures solar radiation.

Having broadly portrayed the nature of the present invention, a particular embodiment will now be described by way of example and illustration only. The photochemical system for the production of

hydrogen from water using a pyrene derivative ($Pyr^q$) methylviologen and a platinum catalyst chosen for this illustration depends upon the following set of reactions

$$Ru(bpy)_3^{2+} + Sunlight \rightarrow {}^*Ru(bpy)_3^{2+} \quad (1)$$

$$^*Ru(bpy)_3^{2+} + Pyr^q \rightarrow Ru(bpy)_3^{2+} + {}^TPyr^q \quad (1A)$$

$$^TPyr^q + mv^{2+} \rightarrow Pyr^{\cdot q+1} + mv^{\cdot +} \quad (2A)$$

$$Pyr^{\cdot q+1} + edta \rightarrow Pyr^q + edta^{\cdot +} \quad (3A)$$

$$2mv^{\cdot +} + 2H_3O^+ \xrightarrow{Pt/pva} H_2 + 2mv^{2+} + 2H_2O \quad (4)$$

where q denotes the formal charge of the pyrene derivative.
where $Ru(bpy)_3^{2+}$ is the tris(2,2'-bipyridine)ruthenium (II) dication (the light-absorbing species), $mv^{2+}$ is the 1,1'-dimethyl-4,4'-bipyridinium dication (methylviologen), edta is ethylenediaminetetraacetic acid and Pyr is the pyrene derivative.
Pt/pva is a colloidal platinum catalyst supported on polyvinylalcohol.
In this model system, the edta acts as a sacrificial electron donor; in a commercial facility for the photolysis of water, the electrons will be supplied by a system similar to the above which results in the oxidation of hydroxyl ions to oxygen. In this present system operation should continue until all edta is consumed.

Many other photochemical systems depend upon Reaction 4 to produce hydrogen although they use different electron donors and/or photosensitizers. The present invention is applicable to all systems using methylviologen and related compounds as electron transfer agents.

The following experimental examples illustrate the working of our invention and the benefits obtainable from its use.

EXAMPLE 1

The following stock solutions were made up:

1. PVA-supported platinum catalyst made by forming platinum "hydroxide" in the presence of dissolved polyvinyl alcohol using the method of Rampino, L.D. and Nord, F.F. (J. American Chem. Soc. (1941) 63, 2745). The finished stock solution of 50 ml contained 5 mg of Pt supported by 0.5% (w/w) of PVA with average molecular weight 125,000. Apparently this catalyst is reduced to the active catalytic species during the induction period which has been observed to occur upon irradiation of the water-reduction system.
2. 293.2 mg of methylviologen dichloride hydrate made up to 100 ml with pH 5 buffer. This was analysed by spectroscopy and the concentration shown to be $1x10^{-2}$ M.
3. 20.2 mg of $Ru(bpy)_3Cl_2.5H_2O$ made up to 100 ml with pH 5 buffer.
4. 37.2 mg of edta as the disodium salt made up to 100 ml with pH 5 buffer (final concentration 1 M).
5. 33.2 mg of trimethylammoniopyrene chloride dihydrate was made up to 50 ml with deionized water (final concentration $2x10^{-3}$ M).
6. 153.7 mg glutathione (reduced) made up to 100ml with pH 5 buffer (final concentration $5x10^{-3}$).

These stock solutions were used to make up a mixture containing the following ingredients at the stated concentration:

| | |
|---|---|
| $Ru(bpy)_3^{2+}$ | $6x10^{-5}$M |
| $mv^{2+}$ | $1x10^{-3}$M |
| edta | 0.1M |
| Pt/PVA | $1x10^{-4}$M |
| Glutathione | $5x10^{-4}$M |

This was divided into three. Trimethylammoniopyrene chloride solution was added to one portion to produce a concentration of $8x10^{-4}M$. Sodium 9-anthracene carboxylate was added to another portion to produce a concentration of $8x10^{-4}M$. No additions were made to the final portion. These solutions were irradiated using the following procedure.

Irradiation procedure

The irradiations were carried out in flat bottom pyrex tubes (17 mm O.D., 13 mm I.D., overall length 90 mm) with a ground conical joint at the top and a sidearm 30 mm below the top. Argon carrier gas was introduced through an inlet tube 50 mm long fitted into the top of the irradiation tube. A Corning 3-72 filter is used to remove light of <420nm . A 5 ml aliquot of the mixture was irradiated while the carrier gas was passed through the solution and out the sidearm through a bed of "Sofnolite" (Sofnol Ltd., U.K.) to absorb $CO_2$ produced by photolysis of edta, and then into the sampling valve of a gas chromatograph. Suitable adjustments of dead volume, carrier gas flow rate and frequency of sampling gave both the composition and yield of hydrogen in the gas mixture. The gas chromatograph used a 2 m column of molecular sieve type 5A and a catharometer detector to separate and measure the hydrogen.

The radiation source was a xenon-mercury arc lamp (1 kW, Oriel) which delivered, after passing through 10 cm of water in a pyrex dish, a total light flux of about 0.50 W of which $3.5x10^{-5}$ Einstein/min was in the range 350-550 nm.

Hydrogen Production

The yields of hydrogen obtained at various trials of irradiation are given in Table 1.

TABLE I

| Time (mins.) | Volume of Hydrogen Produced (mls) | | |
|---|---|---|---|
| | Standard | Anthracene Carboxylate | Trimethyl Amino Pyrene |
| 15 | 0.26 | 1.31 | 1.21 |
| 30 | 0.64 | 2.79 | 2.62 |
| 45 | 1.03 | 4.02 | 4.07 |
| 60 | 1.40 | 4.88 | 5.43 |
| 75 | 1.78 | 5.45 | 6.70 |
| 90 | 2.16 | 5.83 | 7.87 |
| 105 | 2.53 | 6.11 | 8.81 |
| 120 | 2.89 | 6.34 | 9.42 |

EXAMPLE 2

Simultaneous Use of Three Sensitizers

A solution of Fluorescein ($5 \times 10^{-5}$M), Eosin Y ($5 \times 10^{-5}$ M), Rose Bengal ($5 \times 10^{-5}$ M), $mv^{2+}$ ($1 \times 10^{-3}$ M), edta ($1 \times 10^{-1}$ M) and Pt/pva ($1 \times 10^{-4}$ M) in acetate buffer (pH 5.0) was divided into two.

One portion was irradiated as such. To the other was added sodium pyrene-1-sulfonate to give a concentration of $8 \times 10^{-5}$ M. The two solutions were irradiated separately as described above. The yields of hydrogen obtained at various times are given in Table 2.

0138627



Table 2. Use of Three Sensitizers

| Time (mins) | Volume of Hydrogen Produced (ml) | |
|---|---|---|
| | Standard | With Sodium 1-Pyrene sulfonate |
| 15 | 0.04 | 0.72 |
| 30 | 0.08 | 1.23 |
| 45 | 0.12 | 2.24 |
| 60 | 0.16 | 2.68 |
| 75 | 0.20 | 3.24 |
| 90 | 0.25 | 3.94 |
| 105 | 0.31 | 4.26 |
| 120 | 0.34 | 4.61 |

EXAMPLE 3

Use of an Organic Dye as Sensitizer

A solution of Acridine Orange ($5x10^{-5}M$), $mv^{2+}$ ($1x10^{-3}M$), edta (0.1M), Pt/PVA ($5x10^{-5}$ M Pt.) in acetate buffer (pH 5.0) was divided into two.

One portion was irradiated as such. To the other was added 1-trimethyl amino pyrene to give a concentration of $5x10^{-4}$ M. This solution was irradiated with a Xenon lamp (150 W). The yields of hydrogen obtained at various times are given in Table 3.

TABLE 3 Hydrogen formation using Acridine Orange and enhancement of rates by incorporating an energy transfer agent.

| Time (mins) | Volume of Hydrogen produced (ml) | | Enhancement Factor |
|---|---|---|---|
| | Standard | With Energy Transfer Agent | Energy Transfer Agent / Standard |
| 15 | 0.14 | 0.54 | 3.8 |
| 30 | 0.42 | 1.33 | 3.2 |
| 45 | 0.70 | 2.10 | 3.0 |
| 60 | 0.98 | 2.90 | 3.0 |
| 75 | 1.23 | 3.70 | 3.0 |
| 90 | 1.51 | 4.50 | 3.0 |
| 105 | 1.75 | 5.20 | 2.9 |
| 120 | 2.01 | 6.05 | 3.0 |

EXAMPLE 4

Use of Various pyrene derivatives as energy transfer agents.

A solution of $Ru(bpy)_3{}^{2+}$ ($6x10^{-5}M$), $mv^{2+}$ ($1x10^{-5}M$), edta ($2x10^{-2}M$), Pt/PVA ($5x10^{-5}M$), Energy Transfer Agent ($5x10^{-4}$) in acetate buffer (pH 5.0).

TABLE 4 Rates of Hydrogen formation as enhanced by (pyrene based) Energy Transfer Agents.

| Energy Transfer Agent | Rate of Hydrogen formation $\mu$mol/min/l of reaction | Enhancement Factor[1] |
|---|---|---|
| nil | 74.5 | 1 |
| (a) 1-trimethyl amino pyrene | 712.9 | 9.2 |
| (b) 4-trimethyl amino pyrene | 531.7 | 7.1 |
| (c) 1-pyrene monosulfonate | 660.0 | 8.9 |
| (d) 1,4-pyrene disulfonate | 489.0 | 6.6 |
| (e) Zwitterionic Pyrene[2] | 778.0 | 10.4 |

1. Ratio of rates of hydrogen formation in the presence and in the absence of energy transfer agent.

2. Pyrene - 1 - $N^+-(CH_3)_2$ $(-CH_2-CH_2-CH_2-SO_3$ )

CLAIMS

1. A photochemical reaction system for the production of hydrogen from water upon exposure to irradiation and which comprises an electron transfer agent and a sensitizer that, when irradiated by ultraviolet and visible light, forms an excited state, characterised in that the system comprises a water soluble pyrene derivative in an amount sufficient to act as an excitation trap to transfer the energy from the sensitizer to the electron transfer agent.

2. A system according to claim 1 including a platinum catalyst.

3. A process for the production of hydrogen by solar radiation of water in which the hydrogen is produced by the interaction of an electron transfer agent with hydronium ion and platinum catalyst in the presence of a sensitizer which captures solar radiation characterised in that the electron transfer agent is activated by an energy transfer agent that is a water soluble pyrene derivative that is activated by the irradiated sensitizer.

4. A system or process according to any preceding claim characterised in that the water-soluble pyrene derivative has attached to the pyrene nucleus one or more of the following groups:

$-\overset{+}{N}R_3$, $-\overset{+}{N}R_2H$, $-\overset{+}{N}H_2$, $-\overset{+}{N}H_3$, $-R'\overset{+}{N}H_3$, $-R'SO_3^-$,

$-\overset{+}{N}R_2-(CH_2)_n-SO_3^-$, $-\overset{+}{N}R_2-(CH)_2)_n-COO^-$,

where R is a $C_1$-$C_6$ alkyl group, R' is a $C_1$-$C_6$ alkylene group attached to the pyrene nucleus, and n is 1 to 6.

5. A system or process according to any preceding claim characterised in that the sensitizer is the tris(2,2'-bipyridine)ruthenium(II) dication.

6. A system or process according to any of claims 1 to 4 characterised in that the sensitizer comprises one or more organic dyes.

7. A system or process according to claim 6 in which the dyes are selected from Eosin dyes (preferably Eosin Y), Acridine dyes (preferably Acridine Orange), Rose Bengal and Fluorescein.

8. A system or process according to any preceding claim in which the electron transfer agent is methyl viologin or a related compound.